# EUROPEAN PATENT SPECIFICATION

(11) **EP 0 608 751 B1**
(45) Date of publication and mention of the grant of the patent: **03.04.1996**
(21) Application number: 94100637.1
(22) Date of filing: 18.01.1994
(51) Int. Cl.: F16H 61/02

(54) **Travel direction inversion method for power transmission**
Verfahren zur Fahrtrichtungsumschaltung eines Lastschaltgetriebes
Méthode d'inversion de direction d'avance pour une transmission de puissance

(30) Priority: 29.01.1993 US 10942
(43) Date of publication of application: 03.08.1994
(73) Proprietor: DEERE & COMPANY, Moline, Illinois 61265 (US)
(72) Inventor: Vaughters, Kevin Lee, Altamont, Kansas 67330 (US)
(74) Representative: Feldmann, Bernhard

(56) References cited:
- DE-A- 2 716 531
- US-A- 4 855 913
- US-A- 4 989 470

## Description

Die Erfindung betrifft ein Verfahren zur Verzögerung eines Fahrzeuges während einer Fahrtrichtungs-Umschaltung seines Lastschaltgetriebes, bei dem die Fahrzeugbewegung von einer ersten Fahrtrichtung in eine zweite Fahrtrichtung umgesteuert wird, wobei das Lastschaltgetriebe mehrere hydraulisch betätigbare Kupplungselemente, einschließlich eines Satzes von Fahrtrichtungskupplungen zur Richtungsumsteuerung aufweist, wie es im Oberbegriff des Anspruchs 1 dargelegt und aus der US-A-4 989 470 bekannt ist.

Die Fa. Funk Manufacturing vertreibt unter der Serie 8000 Lastschaltgetriebe, die einen Eingangssatz von drei Kupplungen, einen mittleren Satz von drei Kupplungen und einen Ausgangssatz von drei Fahrtrichtungskupplungen enthalten, wie es schematisch in Figur 2 gezeigt und in der US-A-4 989 470 ausführlich beschrieben ist. Die Kupplungen werden von neun elektromagnetischen 3-Wege-2-Positionen-Ventilen und zwei elektrohydraulischen Proportional- oder Drucksteuerventilen gesteuert. Die Drucksteuerventile steuern die Druckzufuhr zu den unmittelbar wirkenden Ventilen, die den drei Fahrtrichtungskupplungen zugeordnet sind. Derartige Lastschaltgetriebe können so angesteuert werden, daß sie sich umschalten lassen, indem die Fahrzeuggeschwindigkeit abgesenkt und dann die Fahrtrichtung umgeschaltet wird, ohne daß der Gangschalthebel in jeden Zwischengang eingestellt werden muß. Ein solches Fahrtrichtungsumkehr-Schaltungsverfahren ist in der US-A-4,989,470 beschrieben. Dabei werden alle Kupplungen eines Kupplungseingangssatzes gelöst, um den Motor vom Antriebsstrang zu trennen, wenigstens zwei Kupplungen eines mittleren Kupplungssatzes eingerückt, um Kraftschluß im Getriebe herzustellen, und wenigstens eine Kupplung eines Kupplungsausgangssatzes eingerückt, um die Fahrzeuggeschwindigkeit auf Null zu reduzieren. Nachdem die Fahrzeuggeschwindigkeit auf Null abgefallen ist, wird eine Kupplung in jedem Kupplungssatz eingerückt, um den gewünschten neuen Gang einzustellen. Dieses Verfahren erfordert es somit, daß mindestens drei Kupplungen betätigt werden müssen, um lediglich das Fahrzeug während der Fahrtrichtungs-Umschaltung abzubremsen. Um die Zuverlässigkeit des Getriebes zu erhöhen, ist es wünschenswert, daß während einer Fahrtrichtungs-Umschaltung möglichst wenige Kupplungsbetätigungen erforderlich sind, um das Fahrzeug abzubremsen.

Die der Erfindung zugrunde liegende Aufgabe wird darin gesehen, ein Verfahren zur Verzögerung eines Fahrzeuges während einer Fahrtrichtungs-Umschaltung seines Lastschaltgetriebes, das mehrere Kupplungen, einschließlich eines Satzes von End- oder Fahrtrichtungskupplungen enthält, anzugeben, durch das die Betriebssicherheit des Getriebes gesteigert wird und welches die Betätigung einer möglichst geringen Zahl von Kupplungen und Ventilen erfordert.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die Kupplungen werden vorzugsweise durch elektrohydraulische unmittelbar wirkende Ventile und zwei elektrohydraulische Proportionalventile oder Drucksteuerventile gesteuert. Die Drucksteuerventile modulieren die Druckzufuhr zu den unmittelbar wirkenden Ventilen, welche drei Fahrtrichtungskupplungen zugeordnet sind. Die Fahrzeugverzögerung während der Fahrtrichtungsumschaltung wird durch Freigabe (Drucklosmachen) aller Kupplungen und anschließendes graduelles Unterdrucksetzen lediglich zweier Kupplungen des End- oder Fahrtrichtungskupplungssatzes erreicht, wobei ein Kraftschluß im Getriebe hergestellt wird, der das Fahrzeug abbremst. Nachdem sich die Fahrzeuggeschwindigkeit dem Wert Null angenähert hat, wird wenigstens eine ausgewählte Kupplung, die dem gewünschten Gang in der neuen Fahrtrichtung zugeordnet ist, eingerückt. Die erste Fahrtrichtungskupplung wird nun geöffnet, um den Abbremseffekt aufzuheben, so daß das Fahrzeug in die neue Fahrtrichtung beschleunigt werden kann.

Vorzugsweise wird beim Abbremsen der an die erste und zweite Fahrtrichtungskupplung angelegte Druck graduell gesteigert, um das Fahrzeug graduell aus seiner ersten Fahrtrichtung zu verzögern. Ferner ist es vorteilhaft, im Anschluß an das Einrücken des neuen Ganges und das Öffnen der ersten Fahrtrichtungskupplung den an die wenigstens eine Fahrtrichtungskupplung angelegten Druck graduell zu steigern, um das Fahrzeug graduell in die zweite Fahrtrichtung zu beschleunigen.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: das schematische Diagramm eines Steuersystems für ein Lastschaltgetriebe, bei welchem die vorliegende Erfindung anwendbar ist,
- Fig. 2: die schematische Teilschnittansicht eines Getriebes, bei welchem die vorliegende Erfindung anwendbar ist,
- Fig. 3: das vereinfachte Flußdiagramm eines Algorithmus, bei dem das erfindungsgemäße Verfahren während einer Umschaltung von Vorwärts auf Rückwärts Anwendung findet, und
- Fig. 4: das vereinfachte Flußdiagramm eines Algorithmus, bei dem das erfindungsgemäße Verfahren während einer Umschaltung von Rückwärts auf Vorwärts Anwendung findet.

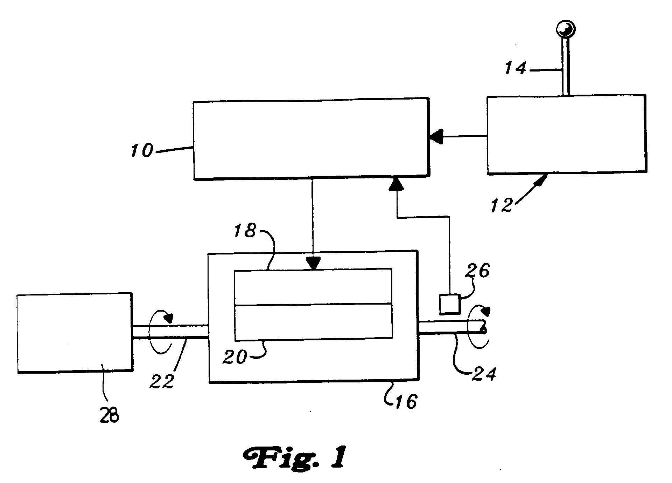

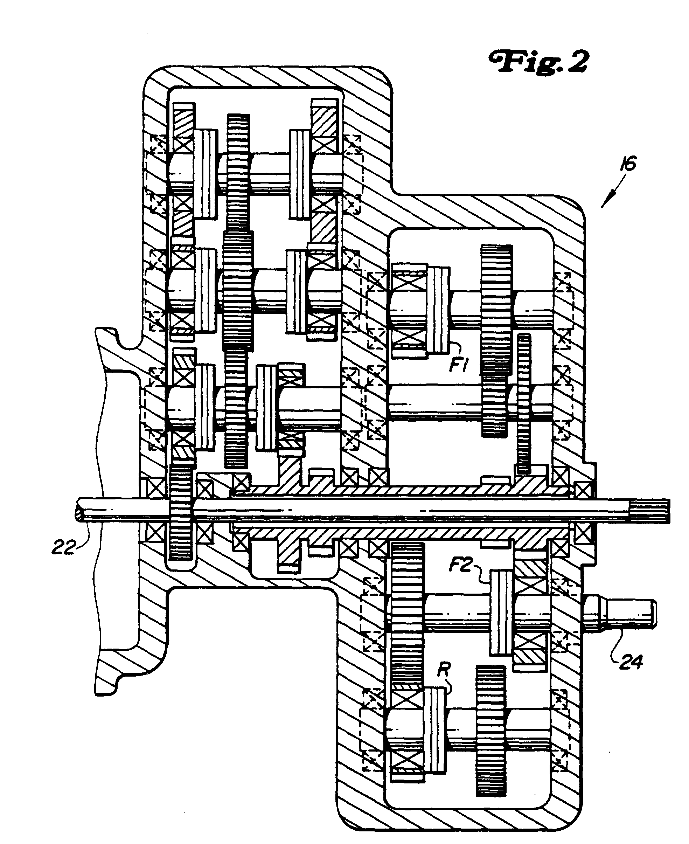

Aus Fig. 1 geht ein Steuersystem für ein Lastschaltgetriebe hervor, welches einen Mikroprozessor 10, einen Schalthebellageumformer bzw. eine Schalteranordnung 12, die manuell durch Betätigung des Schalthebels 14 beeinflußbar ist, und ein Lastschaltgetriebe 16 enthält. Bei dem Lastschaltgetriebe 16 handelt es sich vorzugsweise um ein bekanntes Lastschaltgetriebe, wie es beispielsweise unter der Seriennummer 8000 durch die Fa. Funk Manufacturing hergestellt wird und wie es ausführlich in der US-A-4 989 470 beschreiben ist. Dieses bekannte Lastschaltgetriebe 16 enthält eine hydraulisch gesteuerte Ventilanordnung 18, die mehrere hydraulisch steuerbare Kupplungen 20 ansteuert. Zu den Kupplungen 20 gehören, wie am besten aus Fig. 2 ersichtlich, auch Fahrtrichtungskupplungen (Vor- und Rückwärts-Kupplungen) F1, F2 und R, die im Endbereich des Lastschaltgetriebes 16 angeordnet sind. Das Lastschaltgetriebe 16 überträgt Leistung von einer durch einen Motor 28 angetriebenen Eingangswelle 22 zu einer Ausgangswelle 24, über die der Endantrieb eines Fahrzeugs angetrieben werden kann. Ein Sensor 26 erfaßt die Drehbewegung der Ausgangswelle 24 und liefert Ausgangssignale, die der Fahrzeuggeschwindigkeit entsprechen.

Der Schalthebel 14 enthält vorzugsweise Vorwärts-, Neutral- und Rückwärtspositionen. Er kann Hochschalt- und Runterschalt-Unterpositionen enthalten, die den Vorwärts- und Rückwärtspositionen zugeordnet sind. Er kann ferner unmittelbar von einer Vorwärts- in eine Rückwärtsposition oder von einer Rückwärts- in eine Vorwärtsposition bewegt werden, um eine Fahrtrichtungsumschaltung oder Reversierschaltung (shuttle shift) auszuführen. Der Mikroprozessor 10 tastet periodisch die Position des Schalthebels 14 ab und steuert entsprechend den Betrieb der Ventile 18 und Kupplungen 20.

Gemäß Fig. 2 enthält das Getriebe 16 einen Satz von End- oder Fahrtrichtungskupplungen, der die Kupplungen F1, F2 und R umfaßt. Die vorliegende Erfindung betrifft ein Verfahren, in welchem die Kupplungen F1, F2 und R so betätigt werden, daß das nicht dargestellte Fahrzeug, in das das Lastschaltgetriebe 16 eingebaut ist, während einer Fahrtrichtungsumschaltungs-Schaltbetätigung verzögert wird.

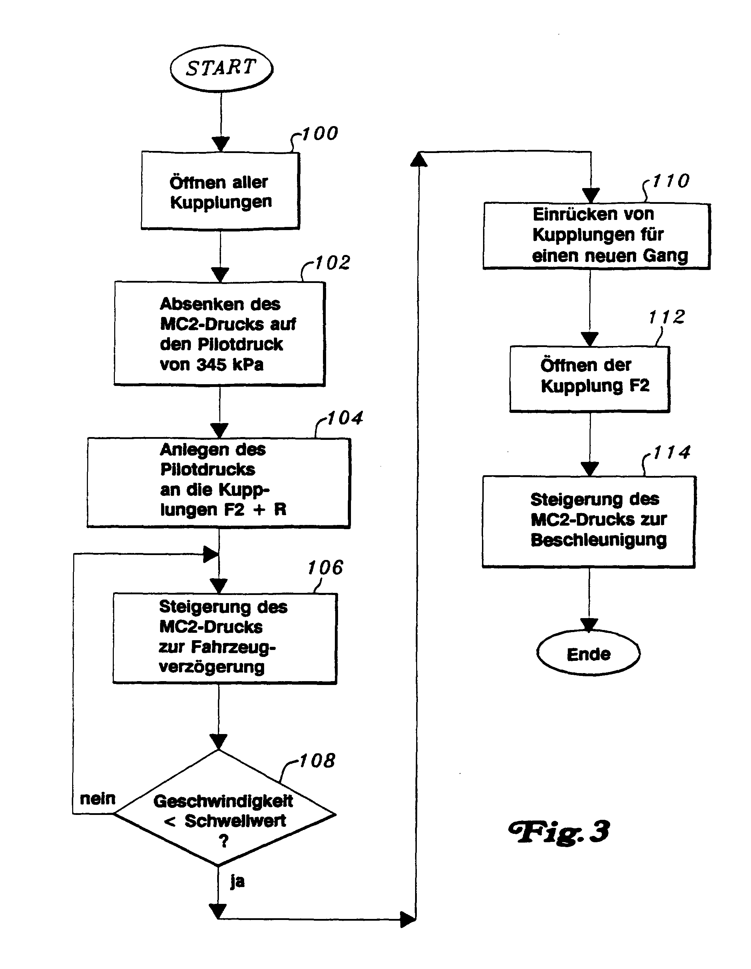

Gemäß Fig. 3 wird eine Reversierschaltung von einem Vorwärtsbereich in einen Rückwärtsbereich wie folgt ausgeführt:

Zuerst werden alle Kupplungen in Schritt 100 geöffnet. Dann wird in Schritt 102 genügend Strom an das Proportionalventil MC2 (welches den Druck zu den Kupplungen F2 und R steuert) angelegt, um den Pilotdruck auf einen Druck abzusenken, der gerade ausreicht, um einen Anfangskupplungseingriff herbeizuführen (beispielsweise 50 psig = ca. 345 kPa Überdruck). Als nächstes wird in Schritt 104 dieser Pilotdruck an die Kupplungen F2 und R angelegt. Da die Kupplung R relativ zum Ausgang einen Drehmomentenvorteil besitzt, d. h. mehr Drehmoment aufnimmt als die Kupplung F2, rückt die Kupplung R ein und die Kupplung F2 schleift.

Dann wird der Druck, der durch das Proportionalventil MC2 an die Kupplungen F2 und R angelegt wird, moduliert oder erhöht, um eine graduelle und gesteuerte Verzögerung des Schleppers herbeizuführen. Beispielsweise kann eine Rückkopplungsschleife verwendet werden, um den an die Kupplungen F2 und R angelegten Druck als Funktion der Verzögerungsrate, die aus dem Signal des Drehzahlsensors 26 am Getriebeausgang abgeleitet wird, einzustellen (Schritte 106 und 108). Als Folge hieraus absorbiert allein die Kupplung F2 Energie und leitet eine Verzögerung des Schleppers ein.

Wenn der Schlepper zur Ruhe gekommen oder auf eine vorgebbare Fahrgeschwindigkeit verzögert worden ist, werden eine oder mehrere Kupplungen angelegt, um den gewünschten Gang des Getriebes für eine Bewegung in die entgegengesetzte Richtung einzuschalten (Schritt 110). Die Kupplung F2 wird durch Druckentlastung geöffnet (Schritt 112), während der an der Kupplung R anstehende Druck aufrechterhalten wird.

Als nächstes wird der durch das Proportionalventil MC2 an die Kupplung R angelegte Druck moduliert bzw. erhöht, um eine graduelle und gesteuerte Beschleunigung des Schleppers in die neue Fahrtrichtung herbeizuführen (Schritt 114). Auch hier kann eine Rückkoppelschleife verwendet werden, um die Beschleunigungsrate des Schleppers zu steuern.

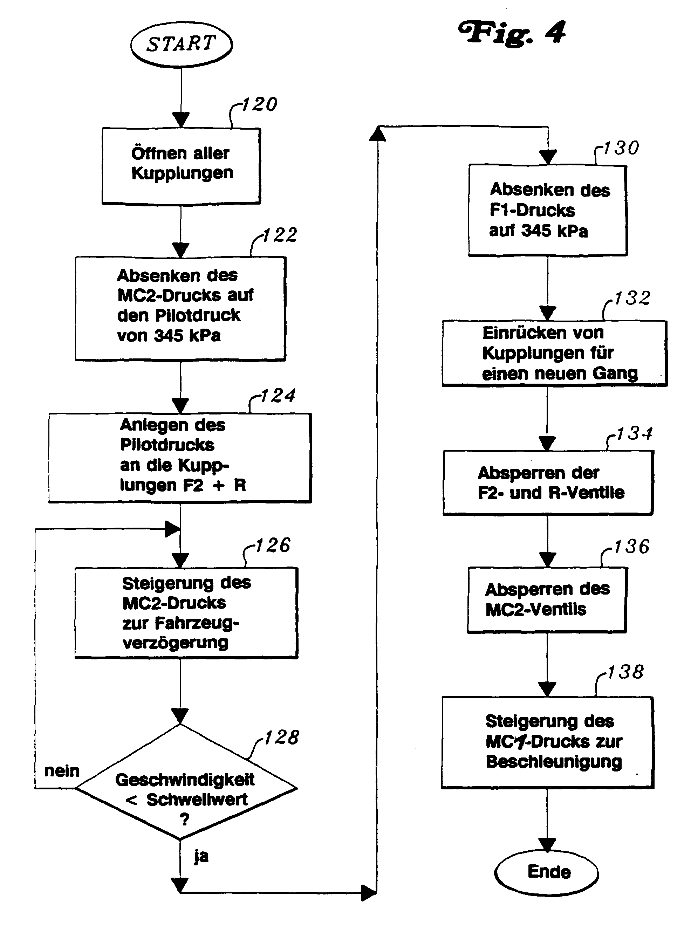

Gemäß Fig. 4 wird eine Reversierschaltung von einem Rückwärtsbereich in einen (unteren) Vorwärtsbereich wie folgt ausgeführt:

Zuerst werden alle Kupplungen in Schritt 120 geöffnet. Dann wird in Schritt 122 genügend Strom an das Proportionalventil MC2 (welches den Druck zu den Kupplungen F2 und R steuert) angelegt, um den Pilotdruck auf einen Druck abzusenken, der gerade ausreicht, um den Kupplungseingriff zu initialisieren (beispielsweise 50 psig = ca. 345 kPa Überdruck). Als nächstes wird in Schritt 124 dieser Pilotdruck an die Kupplungen F2 und R angelegt. Da die Kupplung R relativ zum Ausgang einen Drehmomentenvorteil besitzt, d. h. mehr Drehmoment aufnimmt als die Kupplung F2, schließt die Kupplung R, und die Kupplung F2 schleift.

Dann wird der Druck, der durch das Proportionalventil MC2 an die Kupplungen F2 und R angelegt wird, moduliert bzw. erhöht, um eine graduelle und gesteuerte Verzögerung des Schleppers herbeizuführen. Beispielsweise kann eine Rückkopplungsschleife verwendet werden, um den an die Kupplungen F2 und R angelegten Druck als Funktion der Verzögerungsrate, die aus dem Signal des Drehzahlsensors am Getriebeausgang abgeleitet wird, einzustellen (Schritte 126 und 128). Als Folge hieraus absorbiert allein die Kupplung F2 Energie und leitet eine Verzögerung des Schleppers ein. Es ist zu berücksichtigen, daß infolge unterschiedlicher Kupplungsrutschgeschwindigkeiten die Druckanstiegsrate für eine Reversierschaltung von Rückwärts auf Vorwärts von der Druckanstiegsrate für eine Reversierschaltung von Vorwärts auf Rückwärts abweichen kann.

Wenn der Schlepper zur Ruhe gekommen oder auf eine vorgebbare Geschwindigkeit verzögert worden ist, wird in Schritt 130 das Modulationsventil MC1 so angesteuert, daß die Kupplung F1 mit einem Pilotdruck beaufschlagt wird, der gerade ausreicht, um einen anfänglichen Kupplungseingriff herbeizuführen (beispielsweise 50 psig = ca. 345 kPa Überdruck). Dann werden eine oder mehrere Kupplungen angelegt, um den gewünschten Gang des Getriebes für eine Bewegung in die entgegengesetzte Richtung einzuschalten (Schritt 132). Die Kupplungen F2 und R werden beide druckentlastet, und der Strom zu dem Proportionalventil MC2 wird abgeschaltet (Schritt 134 und 136).

Als nächstes wird der durch das Proportionalventil MC1, welches den Druck zu der Kupplung F1 steuert, an die Kupplung F1 angelegte Druck moduliert oder erhöht, um eine graduelle und gesteuerte Beschleunigung des Schleppers in die neue Fahrtrichtung herbeizuführen (Schritt 138). Auch hier kann eine Rückkoppelschleife verwendet werden, um die Beschleunigungsrate des Schleppers zu steuern.

## Claims

1. A method of decelerating a vehicle during reversal of the direction of travel of a powershift transmission (16), in which the direction of movement of the vehicle is reversed from a first direction of travel to a second direction of travel, wherein the powershift transmission (16) has a plurality of hydraulically operated clutch elements, including a set of travel direction clutches (F1, F2, R) for controlling the direction of travel, characterized by the following method steps:
- opening all clutches,
- applying fluid pressure solely to a first travel direction clutch (F2) and a second travel direction clutch (R), in order to create lock-up in the transmission,
- after the vehicle speed approaches zero, fluid pressure is applied to at least one selected clutch which does not pertain to the travel direction clutches, in order to engage this and enable movement of the vehicle in the second direction of travel in a desired gear, and
- relieving the first travel direction clutch (F2) of pressure.

2. A method according to claim 1, characterized in that the pressure applied to the first and second travel direction clutches (F2, R) is gradually increased, in order to decelerate the vehicle gradually.

3. A method according to claim 1 or 2, characterized in that the pressure applied to the travel direction clutch is gradually increased, in order to accelerate the vehicle gradually in the second direction of travel.

## Patentansprüche

1. Verfahren zur Verzögerung eines Fahrzeuges während einer Fahrtrichtungs-Umschaltung seines Lastschaltgetriebes (16), bei dem die Fahrzeugbewegung von einer ersten Fahrtrichtung in eine zweite Fahrtrichtung umgesteuert wird, wobei das Lastschaltgetriebe (16) mehrere hydraulisch betätigbare Kupplungselemente einschließlich eines Satzes von Fahrtrichtungskupplungen (F1, F2, R) zur Richtungsumsteuerung aufweist, gekennzeichnet durch folgende Verfahrensschritte:
- Öffnen aller Kupplungen,
- Anlegen von Flüssigkeitsdruck an lediglich eine erste Fahrtrichtungskupplung (F2) und eine zweite Fahrtrichtungskupplung (R), um Kraftschluß im Getriebe herzustellen,
- nach Annäherung der Fahrzeuggeschwindigkeit an den Wert Null wird an wenigstens eine ausgewählte Kupplung, die nicht den Fahrtrichtungskupplungen angehört, ein Flüssigkeitsdruck angelegt, um diese einzurücken und eine Bewegung des Fahrzeugs in die zweite Fahrtrichtung bei einem gewünschten Gang zu ermöglichen, und
- Druckentlasten der ersten Fahrtrichtungskupplung (F2).

2. Verfahren nach Anspruch 1, dadurch gekennzeichnet, daß der an die erste und zweite Fahrtrichtungskupplung (F2, R) angelegte Druck graduell gesteigert wird, um das Fahrzeug graduell zu verzögern.

3. Verfahren nach Anspruch 1 oder 2, dadurch gekennzeichnet, daß der an die Fahrtrichtungskupplung angelegte Druck graduell gesteigert wird, um das Fahrzeug graduell in die zweite Fahrtrichtung zu beschleunigen.

## Revendications

1. Procédé pour décélérer un véhicule pendant une inversion de la direction de déplacement dans sa transmission commandée en charge (16), selon lequel le déplacement du véhicule est inversé d'une première direction de déplacement dans une seconde direction de déplacement, la transmission commandée en charge (16) comportant plusieurs éléments d'accouplement pouvant être actionnés hydrauliquement, y compris un ensemble d'accouplements (F1,F2,R) réglant la direction de déplacement pour inverser la direction, caractérisé par les étapes opératoires suivantes :
- ouverture de tous les accouplements,
- application d'une pression d'un liquide uniquement à un premier accouplement (F2) réglant la direction de déplacement et un second accouplement (R) réglant la direction de déplacement, pour établir un flux de force dans la transmission,
- après que la vitesse du véhicule s'est rapprochée de la valeur zéro, application d'une pression de liquide à au moins un accouplement sélectionné, qui ne fait pas partie des accouplements de réglage de la direction de déplacement, pour enclencher cet accouplement et permettre un déplacement du véhicule dans la seconde direction de déplacement, pour un rapport désiré, et
- détente de pression du premier accouplement (F2) réglant la direction de déplacement.

2. Procédé selon la revendication 1, caractérisé en ce que la pression appliquée aux premier et second accouplements (F2,R) réglant la direction de déplacement est accrue graduellement pour obtenir une décélération graduelle du véhicule.

3. Procédé selon la revendication 1 ou 2, caractérisé en ce que la pression appliquée à l'accouplement réglant la direction de déplacement est accrue graduellement afin d'accélérer graduellement le véhicule dans la seconde direction de déplacement.
